# EUROPEAN PATENT APPLICATION

(11) **EP 1 640 643 A1**
(43) Date of publication of application: **29.03.2006**
(21) Application number: 05013080.6
(22) Date of filing: 17.06.2005
(51) Int. Cl.: F16J 15/12, F16J 15/02

(54) **Gasket**

(30) Priority: 24.09.2004 JP 2004277877
(71) Applicant: Carl Freudenberg KG, 69469 Weinheim (DE)
(72) Inventor: Ono, Shigeyuki NOK Corporation, Fukushima-shi Fukushima 960-1193 (JP); Nakao, Takashi NOK Corporation, Fukushima-shi Fukushima 960-1193 (JP); Miyake, Kuniaki NOK Corporation, Fukushima-shi Fukushima 960-1193 (JP)

(57) **Abstract**

A gasket having a satisfactory sealing function with a high surface pressure and a low reaction force is disclosed. The gasket 1 which is made of a rubber-like elastic material, and which is fitted in an attaching groove so as to be compressed when the attaching groove and an opposite surface facing the attaching groove, approach together, so as to effect sealing, has, in its intermediate part in the depthwise direction of the attaching groove, a bent portion which is bent so that the tip portion 2 making contact with the bottom surface of the attaching groove and a tip portion 3 making contact with the opposite surface are inclined toward the inner circumferential surface side I, and a metal plate 5 arranged on the surface of the gasket on the outer circumferential surface side O, bent along the bent portion 4 and fitted to the side surface of the attaching groove.

## Description

### BACKGROUND OF THE INVENTION

### Field of the Invention

The present invention relates to a gasket used in an automobile, general-purpose industrial machinery, electric home appliance, computers or the like.

### Description of the Related Art

A gasket used in an assembly portion, for example, between a cylinder head and a cylinder head cover in an automobile engine is adapted to prevent oil, oil mist or the like from leaking from the inside of the cylinder head cover to the outside. The gasket is located in an attaching groove and is compressed by causing an opposite surface facing the attaching groove to approach the attaching groove in order to effect sealing. The cross-section of the gasket which is made of a rubber-like elastic material has any of various shapes such as a convex shape, a diamond shape, an elliptic shape or a shape in combination of a convex shape and a concave shape.

Such a gasket is compressed when the above-mentioned opposite surface and the attaching groove approach together so that it is made into close contact with the opposite surface and the bottom surface of the attaching groove in order to prevent occurrence of leakage through micro-unevenness caused on the surfaces thereof during cutting work thereof. Thus, the gasket has a predetermined squeezing rate between two surfaces in order to effect sealing with the use of a surface pressure due to squeezing thereof. At this stage, the squeezing rate is set to a value which is higher than as required in view of compression set (a creep throughout a service life) and a decrease in squeezing rate due contraction at a low temperature. Should the gasket is used with such a high squeezing rate, a surface pressure is exerted to the cylinder head and the cylinder head cover in proportion to the squeezing rate.

Meanwhile the increased surface pressure causes a reaction force to increase. In the case of a cylinder head cover made of aluminum, the cover itself has a high stiffness, and accordingly, it is not deformed even though a high reaction force is exerted from the gasket to the cover.

These years, however, cylinder head covers made of resin materials have been prosperously used in order to make a cylinder head to be lightweight and to enhance the freedom of formativeness thereof. The cylinder head cover made of a resin material has a low stiffness in comparison with that of an aluminum cylinder head cover, and accordingly, if an ordinarily designed gasket is used, the cylinder head cover is locally deformed causing gaps through which leakage would be caused. Thus, it has been desired to use a gasket which can ensure a satisfactory squeezing rate and which causes a low reaction force even though a high surface pressure is induced.

When designing a gasket causing a high surface pressure and a low reaction force, the gasket has an elongated sectional shape along an attaching groove in the cylinder head cover so as to ensure a satisfactory squeezing rate while micro protrusion are formed on a convex distal end thereof so as to enhance the surface pressure, and further, the reaction force can be reduced by preventing the gasket from making contact with a side surface of the attaching groove.

Further, a wedge-like slit may be formed in a cylinder head side contact surface (an widened part in a lower part of a convex part) of the gasket in order to lower the reaction force (Refer to Japanese Patent Laid-Open No.2002-71024).

The above-mentioned conventional technique has raised a problem of buckling which is likely to occur due to the elongated sectional shape of the gasket, a problem of occurrence of twisting or inclination of a gasket in an attaching groove due to the shape of the gasket which prevents the gasket from making contact with a side surface of the attaching groove, a problem of come-off of a gasket from an attaching groove in which it is fitted, and the like.

Further, a gasket only formed of a rubber-like elastic material has a high flexibility, and according, it is impossible to aim at realizing automation of fitting of a gasket in an attaching groove. Thus, a relative laborious work is required only for fitting the gasket during assembly of an engine, resulting in expensive assembly costs. In order to realization of the above-mentioned automation, there have been proposed a method of fitting a gasket to a metal member having a shape similar to that of an attaching groove, and the like. However, these methods inevitably cause a problem of an increased number of components, a problem of consideration of a bond strength between the metal member and the cylinder head cover, and the like.

### SUMMARY OF THE INVENTION

The present invention is devised in view of the above-mentioned problems, and accordingly, an object of the present invention is to provide a gasket which can exhibit a satisfactory sealing function with a high surface pressure and a low reaction force.

To the end, according to the present invention, the following configuration is taken:
A gasket made of a rubber-like material fitted in an attaching groove, which is compressed by causing an opposite surface facing the attaching groove to approach the attaching groove so as to effect sealing, characterized in that
   the gasket has a bent portion in its middle portion in a depthwise direction of the attaching groove, the middle portion being bent so that a tip portion of the gasket making contact with a bottom surface of the attaching groove and/or a tip portion of the gasket making contact with the opposite surface are tilted toward one of side surfaces thereof facing one of side surface of the attaching groove,
   a high-rigidity thin plate is laid on the other one of the side surface of the gasket around the bent portion, the high-rigidity thin plate being bent along the bent portion so as to be fitted with the other one of the side surfaces of the attaching groove.

With this configuration, the bent portion is bent during compression further than as usual, and accordingly, the high-rigidity thin plate also bent correspondingly. Simultaneously with the bending, the high-rigidity thin plate exerts a surface pressure to the tip portions making contact with the bottom surface of the attaching groove and the opposite surface for the gasket, due to its spring effect, thereby it is possible to obtain a high surface pressure for the gasket.

Meanwhile, since the gasket including the high-rigidity obtains a high surface pressure, the quantity of a rubber-like material can be small in comparison with that of a conventional gasket. A occupying rate of the rubber-like material portion is small with respect to the attaching groove in view of its sectional shape. In addition, with this sectional shape, the contact with the bottom surface of the groove can be extremely restrained, and accordingly, the gasket can limit the reaction force to a low value.

As stated above, it is possible to solve two problems of ensuring a high surface pressure and of lowering the reaction force, which are of antinomy, and accordingly, it is possible to exhibit a satisfactory sealing function.

Further, since the high-rigid thin plate is fitted to the other one of the side surfaces of the attaching groove, it is possible to prevent the gasket from coming off from the attaching groove after fitting thereof.

Moreover, since the high-rigid thin plate supports a rubber-like elastic material portion, it can restrain deformation easiness of the gasket, such as flexibility caused by the rubber-like elastic material of the gasket, thereby it is possible to prevent the gasket from twisting and inclining.

Further, a conventional gasket made of a rubber-like elastic material alone has inevitably had an elongated shape in order to ensure a compressibility (a squeezing rate), and accordingly, the attaching groove has inevitably an elongated shape. However, with the configuration of the present invention, the design can be made so that an elongated shape is not essential for the attaching groove. Thus, the freedom of the shape of the attaching groove can be enhanced, and accordingly, the freedom of the design of a member having an attaching groove can be enhanced. Further, since the gasket has not to have an elongated shape, there is caused no problem of inclination of the gasket.

The above-mentioned high-rigid thin plate is preferably made of a magnetic material so as to be attracted by a magnet. In the configuration of the present invention, the high-rigid thin plate is carried by a magnet so as to facilitate the automatic fitting of the gasket into the attaching groove.

The tip portion making contact with the bottom surface of the attaching groove and/or the tip portion making contact with the opposite surface are preferably formed thereon with protrusions adapted to make contact with the associated surface. With this configuration, since stress concentration is caused to the contacting tip portion by the protrusions, thereby it is possible to locally enhance the surface pressure.

According to the present invention, it is possible to exhibit a satisfactory sealing function with a high surface pressure and a low reaction force.

### BRIEF DESCRIPTION OF THE DRAWINGS

Fig. 1 is a view illustrating a part of a gasket in a first embodiment;
Fig. 2 is a partly sectioned view illustrating the gasket in the first embodiment, which is fitted in an attaching groove;
Fig. 3 is a partly sectioned view illustrating the gasket in the first embodiment, which is deformed by compression;
Fig. 4 is a view illustrating a gasket in a second embodiment, which is fitted in an attaching groove;
Fig. 5 is a view illustrating a part of a gasket in a third embodiment;
Fig. 6 is a partly sectioned view illustrating the gasket in the third embodiment, which is fitted in an attaching groove;
Fig. 7 is a partly sectioned view illustrating the gasket in the third embodiment, which is deformed by compression; and
Fig. 8 is a partly sectioned view illustrating a gasket in a fourth embodiment, whih is fitted in an attaching groove.

### DESCRIPTION OF THE PREFERRED EMBODIMENT

### (First Embodiment)

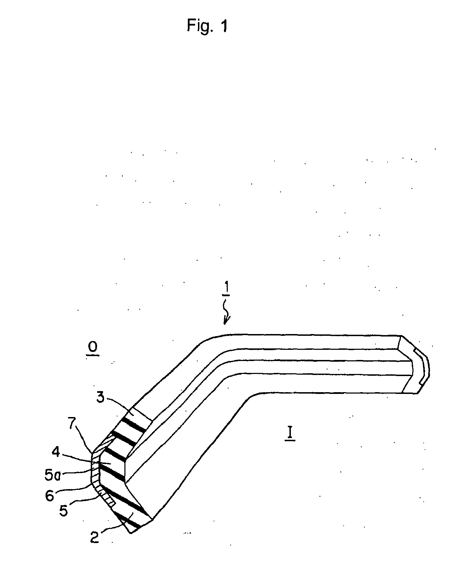

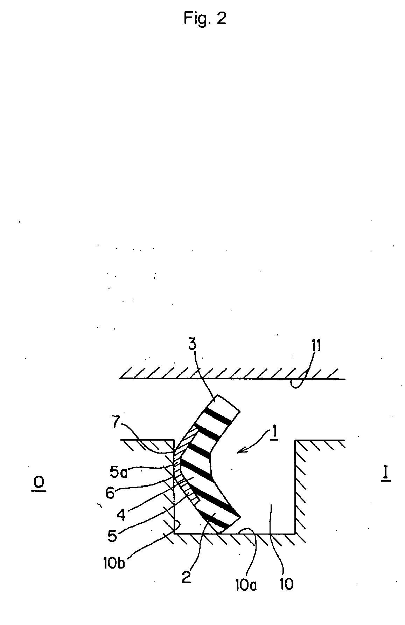

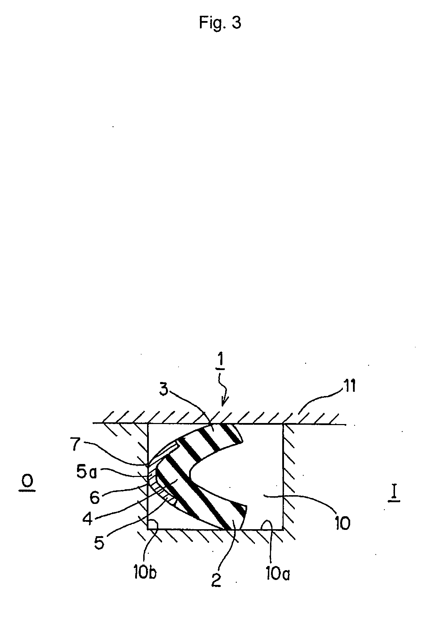

Referring to Figs. 1 to 3, explanation will be made of a first embodiment. Fig. 1 is a view for illustrating a part of a gasket in the first embodiment of the present invention, Fig. 2 is a partly sectioned view illustrating the gasket in the first embodiment, which is fitted in an attaching groove, and Fig. 3 is a partly sectioned view illustrating the gasket in the first embodiment, which is deformed during compression.

In this embodiment, the gasket 1 is interposed between a cylinder head and a cylinder head cover in an automobile engine, The cylinder head cover is formed therein with an attaching groove in which the gasket 1 is arranged, and the cylinder head has an opposite surface 11 facing the attaching groove 10. The gasket 1 is arranged in the attaching groove 10, and is compressed by causing the opposite surface 11 to approach the attaching groove 10 during the assembly of the cylinder head and the cylinder head cover together.

The attaching groove 10 in which the gasket 1 is arranged, has a rectangular cross-sectional shape as shown in Figs. 2 and 3.

The gasket 1 has a body portion which is made of a rubber-like elastic material, which is annular so as to have a single ring shape, and which has a dogleg-like sectional shape as shown in the figure. That is, the gasket has a bent portion 4 in the intermediate part thereof in a depthwise direction of the attaching groove 10 in which the gasket is fitted, The bent portion is bent so that the tip portion which make contact with the bottom surface 10a of the attaching groove 10a and the tip portion 3 which makes contact with the opposite surface 11 are tilted toward the inner circumferential surface side I of the gasket, both tip end parts 2, 3 being bent from the bent portion 4 so as to form a dog-like shape.

This gasket 1 is provided with a metal plate 5 as a high-rigidity thin plate, which is laid on a surface (outer circumferential surface) of the gasket 1 on the outer circumferential surface side O around the bent portion, including parts above and below the bent portion, along the entire periphery of the gasket 1. The metal plate 5 is applied on the rubber-like elastic material portion, being bonded thereto. It is noted here that the application of the gasket 5 may be made in any of various ways, such as insert-molding of the rubber-like material portion, in addition to the application by bonding.

This metal plate 8 is preferably made of a magnetic material such as iron, and accordingly, if the metal plate 5 is made of a magnetic material which is attracted by a magnet, the gasket 1 can be automatically fitted into the attaching groove 10 by gripping the gasket 1 with the magnet.

The metal plate 5 has been previously bent at two bening positions 6, and is laid along the bent portion 4. Upon compression, the metal plate 5 is further bent at the positions 6, 7 and accordingly, the metal plate 5 follows the bending of the bent portion 4. It is noted that the metal plate 5 has a residency so as to cause no plastic deformation through deformation upon compression. Accordingly, the metal plate 5 can be formed of a rigid plate made of any of various materials.

Further, the outer peripheral surface position of the gasket 1 along which the metal plate 5 is arranged, has a diameter substantially equal to that of a side surface 10b of the attaching groove on the outer circumferential side O, and accordingly, when the gasket 1 is fitted in the attaching groove as shown in Fig. 2, the center portion 5a of the metal plate 5 is pushed into the groove while it is pressed in the side surface 10b of the attaching groove on the outer peripheral surface side O so that it is fitted in the grooves with no gaps. Thus, after the fitting of the gasket 1 in the attaching groove 10, the gasket 1 can be prevented from unexpectedly coming off from the attaching groove 10.

Further, the gasket 1 is compressed when the opposite surface 11 and the attaching groove 10 approach together as shown in Fig. 3 (in which they approach together until they make contact with each other). In this compressed condition, the center part 5a of the metal plate 5 is still fitted to the side surface 10b of the attaching groove while the bent portion 4 is further bent. Further, the metal plate 5 is also bent at bending positions 6, 7 as fulcrum points in accordance with a degree of bending of the bent portion.

As stated above, the gasket 1 in this embodiment the bent portion 4 is deformed so as to be bent further during compression than as normal, and accordingly, the metal plate 5 is also bent. Simultaneously with the bending, the metal plate 5 applies by its spring effect a surface pressure to the distal end 2 of the gasket 1 which makes contact with the bottom surface 10a of the attaching groove and the distal end 3 of the gasket 1 which makes contact with the opposite surface 11. Thus, the gasket 1 can receive a high surface pressure.

Meanwhile, since the gasket 1 receives a high surface pressure with the use of the metal plate 5, the quantity of a rubber-like elastic material constituting the body portion of the gasket 1 can be small in comparison with that of the conventional one, and accordingly, a rate of occupation of the rubber-like elastic material portion with respect to the attaching groove 10 is decreased. In addition, with the above-mentioned sectional shape, the contact with the bottom surface 10a of the attaching groove is extremely restrained. Thereby, the reaction force of the gasket 1 can be restrained to a low value.

A problem of antinomy, that is, ensuring of a high surface pressure and reduction of reaction force, which has not been conventionally solved can be solved, thereby it is possible to exhibit a satisfactory sealing function.

Further, since the metal plate 5 supports the rubber-like elastic material portion of the gasket 1, it can constrain deformation easiness such as flexibility caused by the rubber-like elastic material of the gasket 1, and can prevent the gasket 1 from being twisted or inclined within the attaching groove 10. Thus, the gasket 1 is not twisted or inclined, thereby it is possible to exhibit a satisfactory sealing function.

Moreover, a conventional gasket formed on a rubber-like elastic material alone should have an elongated shape in order to ensure a compressibility (squeezing rate), and accordingly, the attaching groove should be also longitudinally long. However, with the configuration of this embodiment, it can be designed that the attaching groove is not elongated, and further, in this embodiment, the attaching groove is indeed transverse long. Thus, the degree of freedom as to the shape of the attaching groove can be increased, thereby it is possible to enhance the degree of design for the cylinder head cover having the attaching groove 10. Further, since it is not required to set the gasket 1 to be longitudinally long, no problem of inclination of the gasket is caused.

It is noted that, in this embodiment, the metal plate 5 made of a magnetic material is used as a high rigid thin plate so that the gasket 1 is magnetically held in order to automatically fit the gasket 1. However, without the necessity of the automatic fitting, any of high rigid thin plates such as a metal plate made of a nonmagnetic material or a resin plate may be used in order to obtain similar advantages, that is, the high rigid thin plate should not be limited to a magnetic metal plate.

### (Second Embodiment)

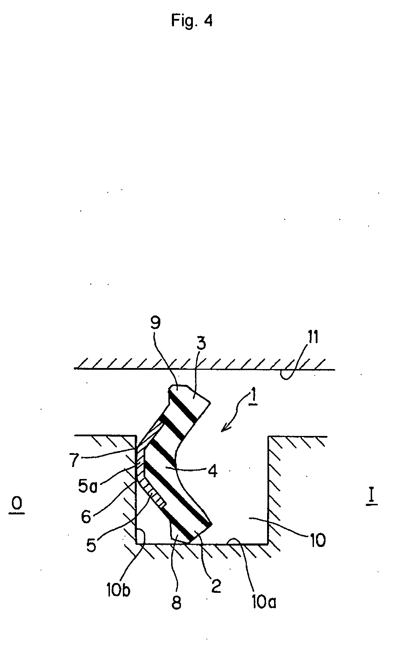

Referring to Fig. 4, explanation will be made of a second embodiment. Fig. 4 is a partly sectioned view which shows a gasket 1 in the second embodiment, which is arranged in an attaching groove. The gasket 1 in this embodiment has the same configuration as that explained in the first embodiment, except that the gasket 1 is provided with protrusions 8, 9. Thus, like reference numerals are used to denote like parts to those in the first embodiment so as to omit the explanation thereof.

The gasket 1 in this embodiment has the protrusions 8, 9 at the tip portion 2 making contact with the bottom surface 10a of the attaching groove and at the tip portion 3 making contact with the opposite surface 11, the protrusions 8, 9 making contact with the respective surfaces 10a, 11. The protrusions 8, 9 have apex angles at their contact positions, which are in a range from 80 to 90 deg. The tip end of the apex angle portion may includes the one which is rounded up to 1.OR in view of cutting work for dies. Further, the tip end may also include the one which is designed so as to have a gentle curvature or which is constituted with several straight lines in combination. The size of the protrusions 8, 9 is up to 5 to 75 % of the width of the attaching groove. Further, the numbers of the protrusions 8, 9 are suitable, that is, one or more.

With this embodiment as stated above, in which the protrusions 8, 9 exert stress concentration at the tip portion, the surface pressure can be locally increased. Thereby it is possible to aim at further increasing the surface pressure of the gasket 1, and to exhibit a satisfactory sealing function with a low reaction force.

### (Third Embodiment)

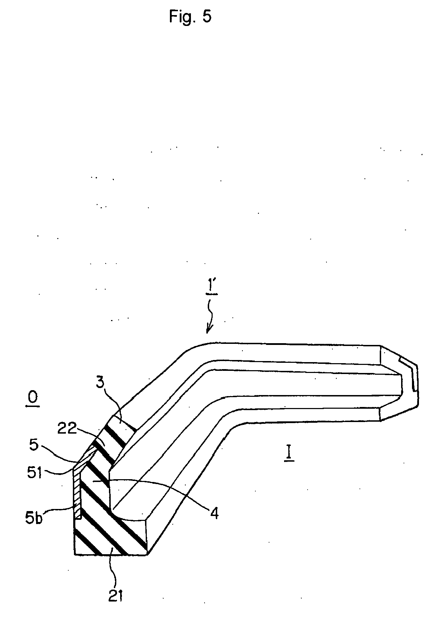

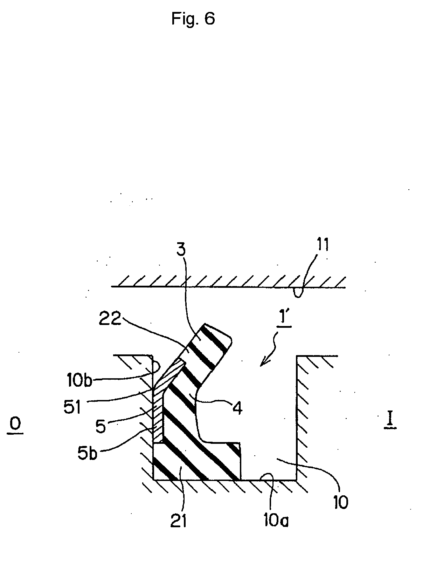

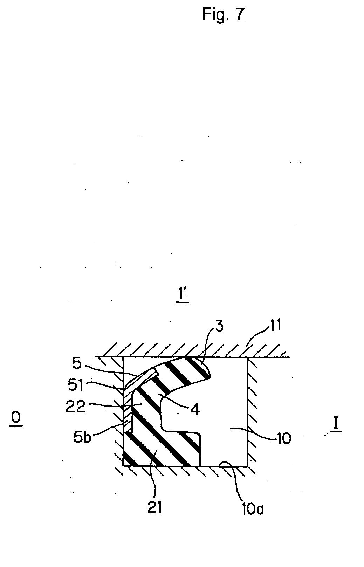

Referring to Figs. 5 to 7, explanation will be made of a third embodiment. Fig. 5 is a view which shows a part of a gasket in the third embodiment. Fig. 6 is a partly sectioned view which shows the gasket in the third embodiment, which is fitted in an attaching groove. Fig. 7 is a partly sectioned view which shows the gasket in the third embodiment, which is deformed under compression. The gasket in this embodiment has an L-like sectional shape. Like reference numerals are used to denote like parts to those explained in the aforementioned embodiments in order to omit the explanation thereto.

The gasket 1' in this embodiment has a body portion which is made of a rubber-like elastic material, and is annular, that is, it has a single ring shape, and has an L-like sectional shape. That is, it has a base portion 21 making contact with the bottom surface 10a of the attaching groove 10 over a wide range, and a rising portion 22 rising up from an end part of the base portion 21, perpendicular to the base portion 21, in the depthwise direction of the attaching groove 10. The rising portion 22 has, in its intermediate part, a bent portion 4 which is bent so that its tip portion 3 making contact with the opposite surface 11 is inclined toward the inner circumferential surface side I of the annular gasket 1, that is, the tip portion 3 is bent at the bent portion 4.

This gasket 1' is also provided with the metal plate 5 as a high rigid thin plate, similar to the first and second embodiments, at the outer surface (outer circumferential surface) of the gasket 1' on the outer circumferential surface side O around the bent portion 4, including parts above and below the bent portion 4, over the entire circumference of the gasket 1'.

The metal plate 5 has been previously bent at one bending position 51, that is, it is bent along the bent portion 4. Upon compression, it is further bent at this bending position 51 so that the metal plate 5 follows the bending of the bent portion 4.

Further, The outer circumferential surface position of the gasket provided with the metal plate 5 has a diameter which is substantially equal to that of the side surface 10b of the attaching groove on the outer circumferential surface side O, and accordingly, when the gasket 1' is fitted in the attaching groove 10 as shown in Fig. 6, the lower half of the metal plate 5 is pushed thereinto, making contact with the side surface 10B of the attaching groove 10b, and accordingly, the gasket 1' is fit with not gap therebetween. Thus, after the gasket 1' is fitted in the attaching groove 10, the gasket 10' is prevented from accidentally coming off.

Further, the gasket 1' is compressed when the opposite surface 11 and the attaching groove 10 approach together, as shown in Fig. 7. In the compressed condition, the lower half 5b of the metal plate 5 is maintained to be fitted to the side surface 10a of the attaching groove while the bent portion 4 is further bent. Further, the metal plate 5 is also bent in accordance with a degree of bending of the bent portion 4.

The gasket 1' as stated above, can also exhibit advantages similar to those explained in the first embodiment.

### (Fourth Embodiment)

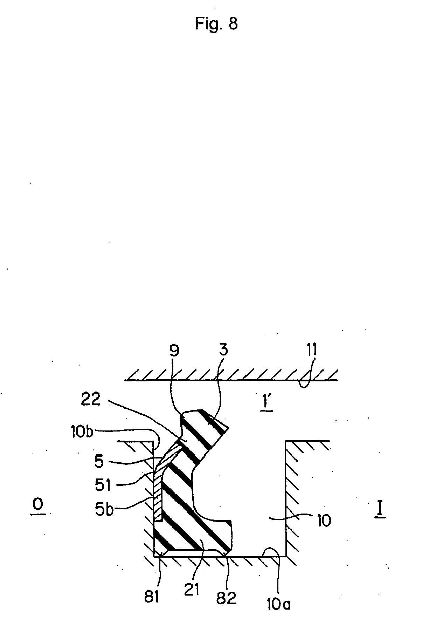

Referring to Fig. 8, explanation will be made of a fourth embodiment. Fig. 8 is a partly sectioned view illustrating a gasket in the fourth embodiment which is fitted in the attaching groove. This embodiment is the same as the first embodiment, except that protrusions 81, 82, 9 similar to those in the second embodiment are provided. Like reference numeral are used to denote like parts so as to omit the explanation thereof.

The gasket 1 in this embodiment has protrusions 81, 82, 9 making contact with the bottom surface 10a of the attaching groove and the opposite surface 11, respectively, in the base portion 21 making contact with the bottom surface 10a of the attaching groove 10 and on the tip portion 3 of the rising portion 22 making contact with the opposite surface 11. The protrusions 81, 82, 89 are similar to those explained in the second embodiment 2.

With this embodiment as stated above, since the protrusions 81, 82, 9 exert a stress concentration to the contact tip portion, the surface pressure can be locally increased. Thus, the surface pressure of the gasket 1' can be further increased, thereby it is possible to exhibit a satisfactory sealing function with a high surface pressure and a low reaction force.

## Claims

1. A gasket formed of a rubber-like elastic material, disposed in an attaching groove, and compressed by an opposite surface facing the attaching groove, which is brought close to the attaching groove, to perform sealing, wherein a middle portion of the gasket in a groove depth direction of the attaching groove has a bent portion bent in such a manner that a tip portion contacting the attaching groove bottom surface and/or a tip portion contacting the opposite surface is tilted on one side-surface side facing one groove side surface of the attaching groove, and a high-rigity thin plate bent along the bent portion and fitted into the other groove side surface of the attaching groove is disposed on the other side surface of the gasket around the bent portion.

2. The gasket according to claim 1, wherein the high-rigity thin plate is a magnetic member attracted by a magnet.

3. The gasket according to claim 1 or 2, wherein the tip portion contacting the attaching groove bottom surface and / or the tip portion contacting the opposite surface has a protusion contacting the surface.
